# EUROPÄISCHE PATENTSCHRIFT

(11) **EP 2 366 121 B1**
(45) Veröffentlichungstag und Bekanntmachung des Hinweises auf die Patenterteilung: **19.09.2012**
(21) Anmeldenummer: 09806079.1
(22) Anmeldetag: 15.12.2009
(51) Int. Cl.: G01V 3/08, A63B 43/00, A63B 24/00

(54) **SYSTEM UND VERFAHREN ZUR BALLBESITZERKENNUNG MIT HILFE PASSIVER FELDERZEUGUNG**
SYSTEM AND METHOD FOR BALL POSSESSION DETECTION USING PASSIVE FIELD GENERATION
SYSTÈME ET PROCÉDÉ DE RECONNAISSANCE DE DÉTENTION DE BALLE À L'AIDE D'UNE GÉNÉRATION DE CHAMP PASSIF

(30) Priorität: 15.12.2008 DE 102008062276; 15.12.2008 US 122536 P
(43) Veröffentlichungstag der Anmeldung: 21.09.2011
(73) Patentinhaber: Cairos technologies AG, 76307 Karlsbad (DE)
(72) Erfinder: ENGLERT, Walter, 88483 Burgrieden (DE)
(74) Vertreter: Grünecker, Kinkeldey, Stockmair & Schwanhäusser
(86) Internationale Anmeldenummer: PCT/EP2009/008994
(87) Internationale Veröffentlichungsnummer: WO 2010/075963

(56) Entgegenhaltungen:
- WO-A1-2008/043450
- WO-A2-01/37945
- DE-A1-102005 017 257
- DE-U1-202004 006 680
- GB-A- 2 462 624
- US-A1- 2006 178 235

## Beschreibung

Die vorliegende Erfindung bezieht sich im Allgemeinen auf das Erfassen und Bereitstellen von spielerbezogenen Informationen bei Ballsportarten und im Speziellen auf das Erfassen und Bereitstellen von Information bezüglich des Ballbesitzes eines Spielers.

Die WO 01/37945 A2 beschreibt die Nachverfolgung von Spielgeräten mit detektierbaren Signaturen. Weiterer Stand der Technik sind aus der DE 20 2004 006680 U1, aus der WO 2008/043450 A1 und aus der US 2006/178235 A1 bekannt.

Es besteht in zunehmendem Maße ein Interesse daran, bei Ballsportarten, wie zum Beispiel dem Fußballspiel, die Interaktion der teilnehmenden Personen mit dem Spielgerät sowie weiterer Kenngrößen zu studieren. Eine objektive Auswertung dieser Informationen liegt im Interesse der am Spiel beteiligten Personen sowie der Zuschauer.

Bei einem Fußballspiel ist es unter anderem interessant, wie oft und wie lange eine Mannschaft oder ein einzelner Spieler im Ballbesitz war. Hierzu bedarf es einer technischen Vorrichtung, um festzustellen, ob sich der Ball innerhalb eines bestimmten Radius um einen Spieler befindet. Jedoch ist es im Allgemeinen nicht wünschenswert, den Spielbetrieb durch gegebenenfalls störende technische Maßnahmen negativ zu beeinflussen.

Bei bestehenden Systemen wurde versucht, durch eine Feldstärkemessung eines Funksenders im Ball diese Informationen zu gewinnen. Jedoch haben Funkwellen den Nachteil, dass die Reichweite aufgrund von Reflexionen und Antennencharakteristiken nur sehr ungenau gemessen werden kann. Somit ist eine eindeutige Ballbesitzerkennung nur schwer möglich, wenn zum Beispiel mehrere Spieler gegnerischer Mannschaften auf engem Raum um den Ball kämpfen.

Hier leistet die vorliegende Erfindung Abhilfe. Die vorliegende Erfindung baut auf der Erkenntnis auf, dass es möglich und vorteilhaft ist, ein Magnetfeld in dem Spielgerät, zum Beispiel dem Ball, durch einen oder mehrere Dauermagnete zu erzeugen. Der Spieler selbst muss dadurch nur eine kleine Vorrichtung tragen, bevorzugt im Schuh oder Schienbeinschützer des Spieler untergebracht, tragen. Diese Vorrichtung enthält einen Magnetfeldsensor zur Erfassung des Magnetfeldes des einen oder der mehreren Dauermagnete.

Die Signale des Magnetfeldsensors werden von einer Steuereinheit ausgewertet, um zu erkennen, ob sich die Vorrichtung, und somit der Fuß des Spielers, in unmittelbarer Nähe zum Ball befindet. Wenn die Steuereinheit ein solches Ballbesitzereignis erkennt, wird diese Information zusammen mit einem Zeitstempel ausgegeben. Die Informationen können auch gespeichert werden, wobei der Speichervorgang entweder kontinuierlich wiederholt wird, solange das Magnetfeld des Dauermagneten erkannt wird, oder das Ereignis wird mit einem Anfangs- und einem Endzeitstempel abgespeichert.

Alternativ kann die Steuereinheit über ein entsprechendes Funkmodul das Erkennen des Magnetfeldes des Dauermagneten zu einer zentralen Erfassungseinheit übermitteln. Somit ist eine zeitnahe Auswertung des Ballbesitzes aller Spieler möglich. Dies kommt den Zuschauern zugute, die schon während des Spiels auf solche Informationen und Statistiken zurückgreifen können, während bei einer Speicherung dies erst in Pausenzeiten oder nach Ende des Spiels möglich ist.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Systems gemäß einer Ausführungsform der vorliegenden Erfindung;
- Fig. 2: eine schematische Darstellung einer spielerseitigen Vorrichtung gemäß einer Ausführungsform der vorliegenden Erfindung;
- Fig. 3: ein Flussdiagramm zur Erläuterung des Verfahrens zum Erfassen von Ballbesitzinformationen gemäß einer Ausführungsform der vorliegenden Erfindung;
- Fig. 4A: ein Verfahren zum Erkennen eines Dauermagneten gemäß einer Ausführungsform der vorliegenden Erfindung;
- Fig. 4B: ein Verfahren zum Erkennen eines Dauermagneten gemäß einer anderen Ausführungsform der vorliegenden Erfindung; und
- Fig. 4C: ein Verfahren zum Erkennen eines Dauermagneten gemäß einer weiteren Ausführungsform der vorliegenden Erfindung.

Zur Verdeutlichung der Erfindung werden nun die beigefügten Zeichnungen näher erläutert. Die folgende Beschreibung der Zeichnungen geht dabei von Ausführungsformen der Erfindung aus, jedoch ist die vorliegende Erfindung nicht auf die einzelnen Ausführungsformen beschränkt. Insbesondere ist die vorliegende Erfindung im Detail für das Fußballspiel erläutert, ist aber in ihrer Anwendung nicht auf diese spezielle Ballsportart beschränkt.

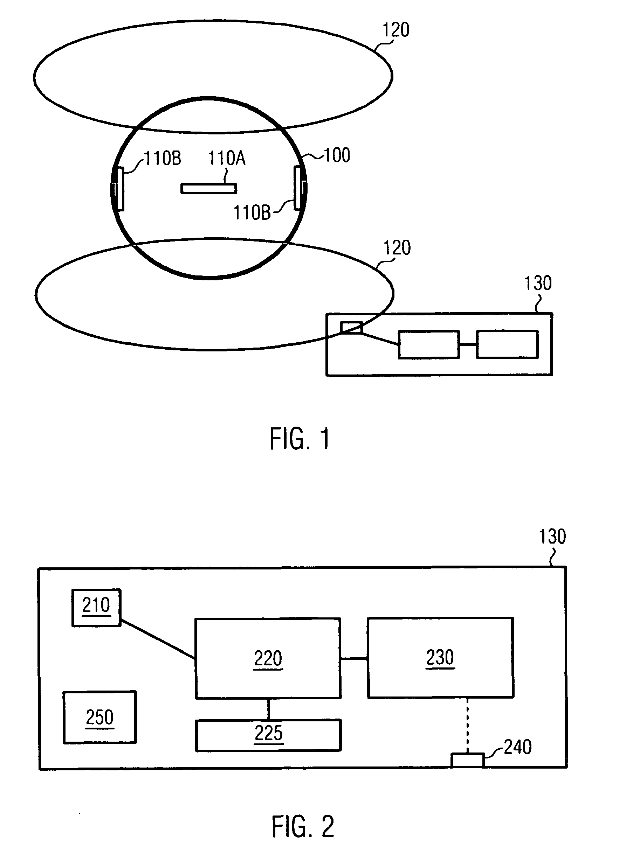

Figur 1 zeigt eine schematische Darstellung eines Systems und einer Vorrichtung zur Erfassung eines Magnetfeldes und einem Spielball gemäß einer Ausführungsform der vorliegenden Erfindung. Das System umfasst den Spielball 100, der mit mindestens einem Dauermagneten ausgestattet ist. Figur 1 zeigt einen ersten Dauermagneten 110A, der vorzugsweise in der Spielballmitte angebracht ist. Dies kann über eine Einspannung mit Fäden oder Federn bewerkstelligt werden. In einer anderen Ausführungsform wird der Dauermagnet 110A durch einen Weichschaum, der das Innere des Balles ausfüllt, an seiner zentralen Position gehalten.

In einer alternativen Ausführungsform werden zwei oder mehr Dauermagneten in der Ballwand integriert oder befestigt. Dies kann zum Beispiel während des Herstellens einer Innenschale oder inneren Hülle des Spielballes bewerkstelligt werden. Die vorliegende Erfindung ist aber weder auf diese Anbringungsmethoden noch auf die beschriebene und gezeigte Anzahl von Dauermagneten beschränkt.

Die Dauermagnete in dem Spielball dienen zum Erzeugen eines Magnetfeldes mit einer vorzugsweise vorbestimmten Reichweite. Die gewählte Reichweite kann zum Beispiel durch die Größe oder das Material des Dauermagneten bestimmt werden. Damit lässt sich sowohl die Bestimmung von direktem Ballbesitz, d. h. einem Kontakt zwischen Fußballschuh und Spielball, als auch eine Bestimmung durch mehrere Fußballschuhe in der Nähe des Spielballes ermöglichen, um so Rückschlüsse auf den so genannten Ballbesitz einzelner Spieler zu erlauben. Durch die Reichweite der Dauermagneten können Vorrichtungen mehrerer Spieler, die zum Beispiel versuchen, in Ballbesitz zu gelangen, die Distanz zu dem Ball erfassen.

Des Weiteren ist der Einsatz von Dauermagneten besonders Kostengünstig für das gesamte System. Beispielsweise benötigt ein solcher Ball keine eigene Stromversorgung, wie es bei Magnetfeldgeneratoren der Fall ist. Zudem ist ein Dauermagnet günstiger und einfacher im Ball anzubringen als Lösungen, die elektronische Schaltkreise umfassen.

Die Figur 1 zeigt des Weiteren eine Vorrichtung 130 zur Erfassung des Ballbesitzes oder der Nähe zu einem Ball. Die Vorrichtung 130 ist in Figur 1 so dargestellt, dass sie sich im unmittelbaren Einflussbereich des Magnetfeldes 120 eines der Dauermagneten befindet. Durch die Zunahme der Magnetfeldstärke mit der Annäherung der Vorrichtung 130 an den Ball 100 kann die Vorrichtung 130 einen Ballbesitz ermitteln. Zum Beispiel kann die Vorrichtung 130, wie weiter unten näher erläutert, die gemessene Magnetfeldstärke mit einem Schwellenwert vergleichen und bei Überschreitung des Schwellenwertes einen Dauermagneten bzw. Ballbesitz erkennen. Gemäß einer Ausführungsform kann je nach Stärke des Dauermagneten dieser Schwellenwert so gesetzt werden, dass ein Bereich von bis zu 25 cm um den Ball als Ballbesitz interpretiert wird.

Die Figur 2 zeigt die oben erwähnte Vorrichtung 130 detaillierter. Sie enthält den Magnetfeldsensor 210, der ein Sensorsignal in Abhängigkeit der gemessenen Magnetfeldstärke erzeugt. In einer weiteren Ausführungsform kann die Vorrichtung 130 auch mit zwei oder mehr Magnetfeldsensoren ausgestattet sein. In einer Ausführungsform der vorliegenden Erfindung enthält der Magnetfeldsensor 122 vorzugsweise ein magnetoresistives Element oder ein Hall-Element. Wird die Magnetfeldstärke mit magnetoresistiven Sensoren als magnetfeldabhängige Widerstände gemessen, können diese zu einer Brücke geschaltet werden. Das Ausgangssignal der Brücke kann mit einem Differenz-Verstärker verstärkt werden. Die Ausgangsspannung ist ein direktes Maß für die Feldstärke des gemessenen Magnetfeldes. Um bei jeder möglichen Rotationsachse des Spielballs ein auswertbares Signal zu erhalten, können zwei oder drei um jeweils 90 Grad versetzte Sensoren verwendet werden.

Alternativ kann die Feldstärke mit Hall-Sensoren gemessen werden. Hall-Sensoren erzeugen proportional zur Feldstärke eine Spannung. Diese Spannung kann mit Hilfe eines Differenz-Verstärkers verstärkt werden. Die Ausgangsspannung ist ein direktes Maß für die Feldstärke des Magnetfelds. Die Auswertung dieser Spannung kann entweder diskret über eine analoge Schaltung oder mit Hilfe einer Steuereinheit 220, beispielsweise einem Mikrocontroller, erfolgen. Um bei jeder möglichen Rotationsachse des Spielballs ein auswertbares Signal zu erhalten, können zwei oder drei um 90 Grad versetzte Sensoren verwendet werden.

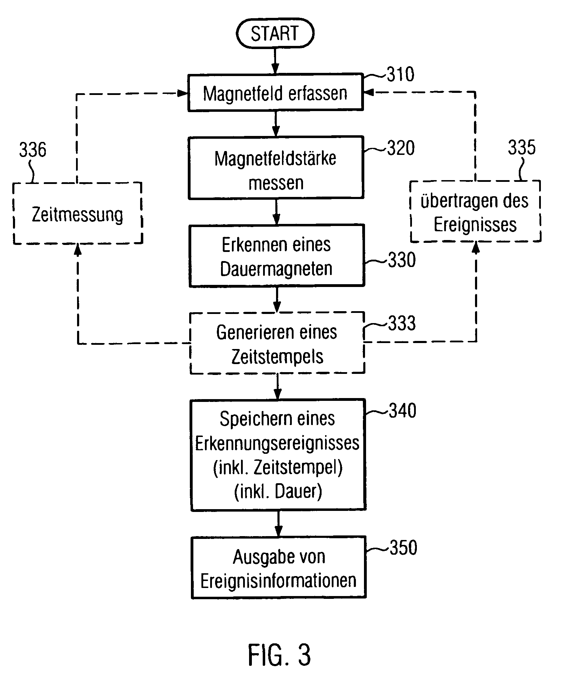

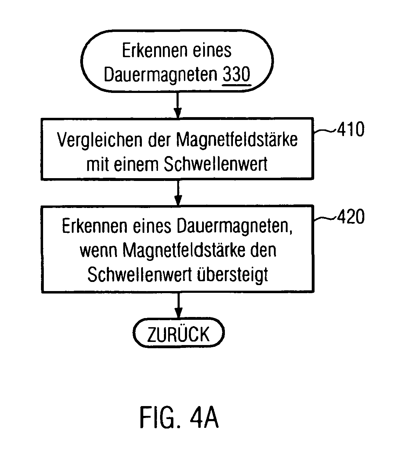

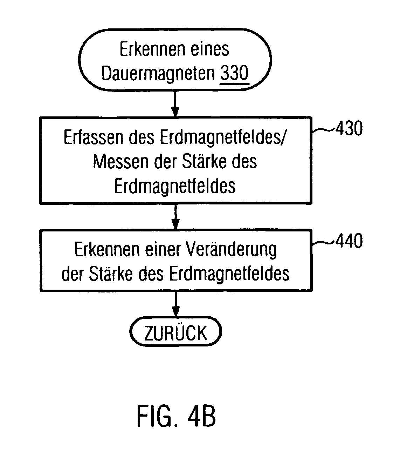

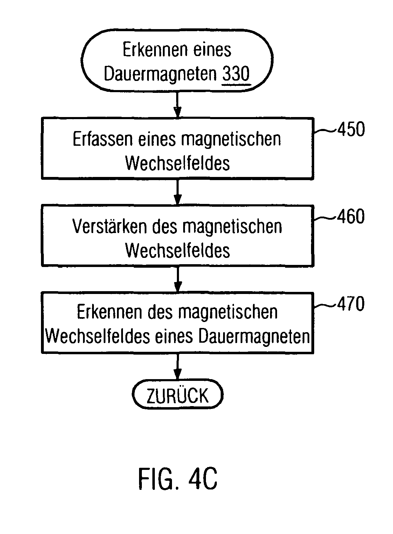

Die Steuereinheit 220, die mit dem Magnetfeldsensor zur Erfassung eines Ausgangssignals gekoppelt ist, verarbeitet das Signal weiter. In einer Ausführungsform der vorliegenden Erfindung vergleicht die Steuereinheit 220 das empfangene Signal des Magnetfeldsensors 210 mit einem Schwellenwert, um zu ermitteln, ob sich ein Dauermagnet in unmittelbarer Nähe zu dem Magnetfeldsensor 210 befindet. Diese und weitere Ausführungsformen werden unten in Bezug auf Figuren 3 und 4 näher erläutert.

Die Vorrichtung 130 kann in einer Ausführungsform der vorliegenden Erfindung auch eine Speichereinheit 225 enthalten. Dieser Speicher 225 ermöglicht es der Steuereinheit 220, Ereignisse, wie zum Beispiel das Überschreiten eines Schwellenwertes durch das Magnetfeldsensorsignal, zu speichern.

Die Figur 2 zeigt ebenso ein Ausgabemodul 230, was die Ausgabe der ermittelten Ereignisse ermöglicht. In einer Ausführungsform der vorliegenden Erfindung wird die Ausgabeeinheit 230 durch eine Sendeeinheit bereitgestellt. Die Sendeeinheit ist so ausgebildet, dass sie Daten zu einer zentralen Erfassungseinheit übermitteln kann. Diese zentrale Erfassungseinheit kann zum Beispiel am Spielfeldrand angeordnet sein oder an einem anderen Ort, von welchem aus Signale von Sendeeinheiten von dem gesamten Spielfeld aus empfangen werden können. Somit ist eine Übertragung von Informationen, die von der Steuereinheit erzeugt werden zu jeder Zeit während des Spiels möglich.

Alternativ werden die Ereignisse, die durch die Steuereinheit 220 erfasst werden, gespeichert, aber mittels einer Sendeeinheit 230 an die zentrale Erfassungseinheit nach Ende des Spiels oder in einer Pause übertragen. Somit kann die Sendeleistung der Sendeeinheit reduziert werden.

In einer weiteren Ausführungsform wird das Ausgabemodul 230 durch eine kabelgebundene Schnittstelle ausgebildet. Diese ist zum Beispiel mit einer Steckverbindung 240 gekoppelt, wobei das Anschließen einer zentralen Erfassungseinheit über ein Kabel ermöglicht wird. Durch das Anschließen der Vorrichtung 130 an die zentral Erfassungseinheit kann der Inhalt des Speichers ausgelesen werden, wodurch der gesamte Spielverlauf in Hinblick auf Ballbesitz oder Nähe eines Spielers zum Spielball ermitteln werden kann.

Die Vorrichtung 130 enthält ferner eine Energiequelle 250. Die Energiequelle 250 ist gemäß einem Ausführungsbeispiel der vorliegenden Erfindung eine Batterie. Dabei wird die Vorrichtung 130 beispielsweise über eine Lithiumbatterie versorgt. Die Kapazität der Batterie ist dabei so ausgelegt, dass die Funktionalität der Elektronik in der Vorrichtung 130 über eine bestimmte Anzahl von mehreren hundert oder tausend Betriebsstunden sichergestellt ist. Vorzugsweise kann die Energiequelle 250 als austauschbare Einheit vorgesehen sein, die ohne größeren Aufwand vom Anwender ausgewechselt werden kann.

Figur 3 zeigt ein Flussdiagramm zur Erläuterung eines Verfahrens zur Erfassung eines Ballbesitzes oder einer unmittelbaren Nähe zwischen Fußballschuh und Spielball 100.

Das System 130 wird bevorzugt an einem Kleidungsstück eines Spielers angebracht. Zum Beispiel kann das System 130 in einem Fußballschuh integriert sein oder an einem Schienbeinschoner befestigt werden. Nähert sich der Spieler, und somit das System 130, dem Ball, kann der Magnetfeldsensor 210 ein Magnetfeld erfassen, Schritt 310. Es wird ein Erfassungssignal von dem Sensor 210 an die Steuereinheit 220 weitergegeben. Durch das Erfassen des Magnetfeldes misst die Steuereinheit 220 in Schritt 320 die Magnetfeldstärke, die in Form von Sensorsignalen des Magnetfeldsensors 210 abgegriffen werden können. Die Vorrichtung 130 ist somit in den Einflussbereich des Dauermagneten im Spielball gelangt. Zum Beispiel hat sich ein Spieler dem Ball angenähert und versucht, in Ballbesitz zu gelangen.

Als Weiteres erkennt die Steuereinheit 220 in Schritt 330 den Dauermagneten bzw. das Magnetfeld des Dauermagneten. Die Verfahren der Figuren 4A bis 4C zeigen drei Ausführungsformen des Schrittes 330. Diese drei Verfahren können auch verwendet werden, um festzustellen, wie nah der Spieler dem Ball gekommen ist.

In einer Ausführungsform der vorliegenden Erfindung speichert die Steuervorrichtung 220 in Schritt 340 Informationen zu dem oben genannten Ereignis der Ballannäherung. Diese Informationen können zum Beispiel die Magnetfeldstärke des Dauermagneten im Spielball umfassen.

In einer weiteren Ausführungsform der vorliegenden Erfindung kann in einem Schritt 333 ein Zeitstempel generiert werden, wenn die Steuereinheit 220 einen Dauermagneten erkennt. Dieser Zeitstempel kann zusammen mit den Informationen bezüglich eines Erkennungsereignisses abgespeichert werden. Sind Informationen bezüglich des Ballbesitzes mit solch einem Zeitstempel versehen, kann zum Beispiel ausgewertet werden, ob eine Ballweitergabe erfolgreich ausgeführt wurde. Beispielsweise kann bei einer Auswertung festgestellt werden, dass das zeitlich nächste Ereignis durch einen anderen Spieler ausgelöst wurde, der zur gleichen Mannschaft gehört wie der Spieler, der das erste Ereignis auslöste. Somit ist die Ballübergabe innerhalb einer Mannschaft erfolgreich verlaufen.

Ebenso können die Ergebnisse von zwei Systemen 130 dahingehend ausgewertet werden, dass ein Spieler einer gegnerischen Mannschaft in Ballbesitz gelangte. Dafür kann der in Schritt 333 generierte Zeitstempel zusammen mit dem Ereignis in Schritt 340 gespeichert werden.

In einer anderen Ausführungsform wird das Ereignis noch nicht gespeichert, sondern mit der Erfassung des Magnetfeldes und der Messung der Magnetfeldstärke fortgefahren. Wie in Figur 3 gezeigt, gibt es eine optionale Zeitmessung 336, die die Dauer eines Ereignisses misst. In anderen Worten, solange ein Dauermagnet in Schritt 330 erkannt wird, wird mit der Zeitmessung fortgefahren, bis eine Veränderung bei Schritt 330 festgestellt wird. Anschlie-βend kann das Ereignis zusammen mit der Dauer gespeichert werden. Beispielsweise wird die Information bezüglich des Ereignisses mit einer Anfangszeit und einer Endzeit versehen und anschließend gespeichert.

Wie oben erwähnt, gibt es mehrere Ausführungsformen, wie die Informationen bezüglich Ballbesitzereignissen an eine zentrale Auswertungseinheit übermittelt werden. In einer ersten Ausführungsform werden die gespeicherten Daten in Schritt 350 an die zentrale Auswertungseinheit ausgegeben. Diese Ausgabe kann zum Beispiel über eine Sendeeinheit an einen entsprechenden Empfänger, der mit der Auswertungseinheit gekoppelt ist, übermittelt werden. Dies ermöglicht zum Beispiel, dass ein Spieler in einer Pause oder nach Beendigung des Spiels seinen Schuh in die Nähe des Empfängers bringt, wodurch das Senden der Sendeeinheit ausgelöst werden kann.

In einer weiteren Ausführungsform wird die Übertragung mittels eines Kabels durchgeführt, wozu die Vorrichtung 130 über die Schnittstelle 240 und einem Kabel an die zentrale Auswertungseinheit angeschlossen wird. Diese Ausführungsform ermöglicht eine energiesparendere und somit auch kleinere Ausführungsform, als wenn die Vorrichtung 130 eine eigenständige Sendeinheit beinhalten würde.

In einer anderen Ausführungsform werden die Ereignisse nicht gespeichert, sondern sofort nach der Generierung des Zeitstempels in Schritt 333 an die zentrale Auswertungseinheit übertragen, Schritt 335. Diese Ausführungsform wiederum ermöglicht eine einfachere Bauart, weil das System 130 keinen Speicher 225 benötigt. In jedem Fall beginnt die Erfassung des Magnetfeldes in Schritt 310 wieder erneut, sobald die Daten in Schritt 335 übertragen oder in Schritt 350 ausgegeben wurden.

Bezug nehmend auf die Figuren 4A bis 4C werden nun verschiedene Ausführungsformen erläutert, wie die Nähe eines Dauermagneten erkannt werden kann.

Figur 4A zeigt ein Verfahren zum Erkennen eines Dauermagneten, wenn dieser sich in unmittelbarer Nähe zu der Vorrichtung 130 befindet. Dieses Verfahren eignet sich zum Beispiel für die Bestimmung des Ballbesitzes, da durch geeignete Parameter Entfernungen bis 25 cm zwischen Spielball und Fußballschuh ermittelt werden können. In einem ersten Schritt 410 wird die Magnetfeldstärke mit einem Schwellenwert verglichen. Die Magnetfeldstärke wurde, wie in Figur 3 gezeigt, in Schritt 320 mithilfe des Magnetfeldsensors 210 gemessen. Je nach verwendetem Dauermagneten kann der Schwellenwert beispielsweise so voreingestellt sein, dass ein Überschreiten des Schwellenwertes einer Distanz zum Ball von weniger als 25 cm entspricht. In einem weiteren Schritt 420 wird ein Dauermagnet dadurch erkannt, dass die gemessene Magnetfeldstärke den Schwellenwert übersteigt. Diese Information wird durch die Steuereinheit 220 entsprechend verarbeitet. Zum Beispiel kann diesem Ereignis eine bestimmte Identifizierungsnummer zugeordnet werden, die entweder direkt an eine zentrale Erfassungseinheit übermittelt wird oder in dem Speicher 225 gespeichert wird.

Gemäß dem Verfahren der Figur 4B wird das Erkennen eines Dauermagnets unter Berücksichtigung des Erdmagnetfeldes ermittelt. In Schritt 430 wird das Erdmagnetfeld erfasst und die Stärke des Erdmagnetfeldes gemessen. Dieser Schritt kann zum Beispiel erfolgen, wenn ein Spieler das Spielfeld betritt. Für gewöhnlich ist das Erdmagnetfeld auf dem gesamten Spielfeld gleich stark. Die Vorrichtung 130 kann zum Beispiel auch mit einer Eingabetaste ausgestattet sein, wodurch ein Spieler die Erfassung des Erdmagnetfeldes auslösen kann. Auf jeden Fall ist es notwendig, dass sich der Spieler nicht in der Nähe eines Balles mit Dauermagneten aufhält.

In Schritt 440 wird nun ermittelt, ob sich die Stärke des Erdmagnetfeldes verändert hat. Da hierfür natürliche Ursachen ausgeschlossen werden, muss eine solche Veränderung durch einen Magneten verursacht worden sein. Die Steuereinheit 220 kann somit durch Vergleichen der in Schritt 320 gemessenen Magnetfeldstärke mit der Erdmagnetfeldstärke feststellen, ob sich der Spieler in der Nähe des Balles befindet, aber nicht so nah am Ball ist, wie in Bezug auf Figur 4A beschrieben.

Das Verfahren aus Figur 4B eignet sich zum Beispiel für Distanzmessungen bis zu 50 cm vom Ball. Diese Unterscheidung zwischen dem Erkennen eines Dauermagneten im unmittelbaren Bereich (siehe Figur 4A) und in einem etwas weiteren Bereich (siehe Figur 4B) eignet sich zum Beispiel zum Auswerten einer Ballabnahme zwischen zwei Spielern gegnerischer Mannschaften. In solchen Spielsituationen ist es häufig der Fall, dass mehrere Spieler sich in unmittelbarer Nähe des Balles befinden. Welcher Fußballschuh sich zu welchem Zeitpunkt am Ball befunden hat, kann somit Vorteilhafterweise ausgewertet werden. Entsprechend einer weiteren Ausführungsform der vorliegenden Erfindung kann die Nähe zu einem Dauermagneten auch wie folgt detektiert werden. In Schritt 450 ermittelt die Steuereinheit 220, dass der Magnetfeldsensor 210 ein magnetisches Wechselfeld erfasst hat. Beispielsweise kann hierfür in dem Magnetfeldsensor 210 mindestens ein Kondensator vorgesehen werden. Dadurch ist es möglich, dass die Messausgänge des Magnetfeldsensors über den mindestens einen Kondensator so entkoppelt werden, dass nur Wechselfeldern zu den Verstärkern durchgelassen werden. Durch den vergrößerten Verstärkungsfaktor können auch schwächere Wechselfelder erkannt werden. Anschließend wird das magnetische Wechselfeld verstärkt, Schritt 460, um eine Auswertung zu ermöglichen.

Die Steuervorrichtung 220 ermittelt nun in Schritt 470, dass sich das magnetische Wechselfeld eines Dauermagneten in der näheren Umgebung befindet. Da sich in den meisten Ballsportarten der Ball rollend oder drehend fortbewegt, gibt der Ball 100, der mit den Dauermagneten 110 ausgestattet ist, immer ein magnetisches Wechselfeld ab. Dieses Wechselfeld kann aufgrund der Verstärkung gut erkannt werden. Das Verfahren nach Figur 4C eignet sich zum Beispiel für Entfernungen zwischen Spieler und Ball von bis zu einem Meter. Wie oben erwähnt, können solche Ereignisse Vorteilhafterweise genutzt werden, um festzustellen, ob ein sich annähernder Spieler erfolgreich einem Gegner den Ball abgenommen hat. Ein solches Ereignis kann mit einer entsprechenden Identifikationsnummer durch die Steuereinheit 220 versehen werden. Damit ist die Auswertung der Informationen einfacher, wenn je nach Verfahren der Figuren 4A bis 4C verschiedene Identifikationsnummern verwendet werden.

Gemäß der vorliegenden Erfindung ist es über eine Auswertung der Ballbesitzinformation möglich, detaillierte Informationen über die am Spielbetrieb teilnehmenden Spieler zu gewinnen. Dies erlaubt eine Analyse der einzelnen Spieler durch die Auswertung der Gesamtzeiten, in denen sich ein Spieler in Ballbesitz befindet. Diese Daten sind einerseits für Hobbyspieler interessant sowie andererseits für Trainer von professionellen Spielern von Interesse.

## Patentansprüche

1. Vorrichtung (130) zur Ballbesitzerkennung mit Mitteln zum Erfassen eines Magnetfeldes in einem Spielgerät (100) einer Ballsportart, wobei das Magnetfeld durch mindestens einen Dauermagneten (110) in dem Spielgerät erzeugt wird, wobei die Vorrichtung (130) einem Spieler der Ballsportart zugeordnet werden kann und die Mittel zur Magnetfelderfassung umfassen:
einen Magnetfeldsensor (210); und
eine Steuereinheit (220), die mit dem Magnetfeldsensor gekoppelt ist, um ein Sensorsignal von dem Magnetfeldsensor zu erhalten, und die eingerichtet ist zum Erkennen, ob das Sensorsignal durch das Magnetfeld des mindestens einen Dauermagneten in dem Spielgerät verursacht wurde, und zum Ausgeben von Informationen über das Erkennen.

2. Vorrichtung gemäß Anspruch 1, wobei der Magnetfeldsensor das Magnetfeld des mindestens einen Dauermagneten erfasst und die Stärke des Magnetfeldes misst.

3. Vorrichtung gemäß Anspruch 2, wobei der Magnetfeldsensor des Weiteren das Erdmagnetfeld erfasst und die Erdmagnetfeldstärke misst, und wobei die Steuereinheit das Magnetfeld des mindestens einen Dauermagneten aufgrund einer Veränderung der Erdmagnetfeldstärke durch den mindestens einen Dauermagneten erkennt.

4. Vorrichtung gemäß Anspruch 2, wobei der Magnetfeldsensor ausgebildet ist, ein magnetisches Wechselfeld zu erfassen, das durch Rotation des mindestens einen Dauermagneten im Spielgerät erzeugt wird, und wobei die Steuereinheit eingerichtet ist, Informationen über das Erkennen des magnetischen Wechselfeldes auszugeben.

5. Vorrichtung gemäß Anspruch 4, wobei der Magnetfeldsensor mindestens einen Messausgang umfasst, und wobei der mindestens eine Messausgang über mindestens einen Kondensator entkoppelt ist.

6. Vorrichtung gemäß einem der Ansprüche 1 bis 5, wobei der Magnetfeldsensor mindestens einen Verstärker umfasst.

7. Vorrichtung gemäß einem der Ansprüche 1 bis 6, wobei die Steuereinheit eingerichtet ist, das Erkennen des Magnetfeldes zusammen mit einem Zeitstempel, der zugehörig zu dem Zeitpunkt des Erkennens ist, auszugeben.

8. Vorrichtung gemäß einem der Ansprüche 1 bis 7, wobei die Mittel zur Magnetfelderfassung des Weiteren umfassen:
eine Speichereinheit (225);
wobei die Steuereinheit des Weiteren eingerichtet ist, die ausgegebenen Informationen in der Speichereinheit zu speichern.

9. Vorrichtung gemäß Anspruch 8, wobei die Vorrichtung eine Ausgabeeinheit (230) umfasst, die ein Auslesen der Speichereinheit ermöglicht.

10. Vorrichtung gemäß einem der Ansprüche 1 bis 7, wobei die Mittel zur Magnetfelderfassung des Weiteren umfassen:
eine Sendeeinheit;
wobei die Steuereinheit des Weiteren eingerichtet ist, die ausgegebenen Informationen mittels der Sendeeinheit an eine zentrale Auswertungseinheit zu übermitteln.

11. Vorrichtung gemäß Anspruch 9, wobei die Vorrichtung in oder an einem Kleidungsstück des Spielers angeordnet ist, das sich während der Ausübung der Ballsportart bevorzugt in der Nähe des Balls befindet.

12. Verfahren zur Ballbesitzerkennung durch Erfassen eines Magnetfeldes in einem Spielgerät (100) einer Ballsportart, wobei das Magnetfeld durch mindestens einen Dauermagneten (110) in dem Spielgerät erzeugt wird, und wobei das Verfahren umfasst:
Erfassen (310) eines Magnetfeldes;
Messen (320) der Magnetfeldstärke des erfassten Magnetfeldes;
Erkennen (330), ob das Magnetfeld durch den mindestens einen Dauermagneten in dem Spielgerät verursacht wurde; und
Ausgeben (350) von Informationen über das Erkennen.

13. Verfahren gemäß Anspruch 12, wobei Erfassen und Messen umfasst:
Erfassen des Magnetfeldes des mindestens einen Dauermagneten und Messen (320) der zugehörigen Magnetfeldstärke, wobei Erkennen das Vergleichen (410) der gemessenen Magnetfeldstärke mit einem Schwellenwert umfasst;
Erfassen (430) des Erdmagnetfeldes und Messen (430) der Erdmagnetfeldstärke, wobei Erkennen das Erkennen (440) einer Veränderung der Erdmagnetfeldstärke umfasst; oder
Erfassen (450) eines magnetischen Wechselfeldes des mindestens einen Dauermagneten in dem Spielgerät und Messen der Stärke des magnetischen Wechselfeldes, wobei Erkennen das Erkennen (470) des magnetischen Wechselfeldes umfasst.

14. Verfahren gemäß einem der Ansprüche 12 oder 13, des Weiteren umfassend:
Speichern der ausgegebenen Informationen und/oder Übermitteln der ausgegebenen Informationen an eine zentrale Auswertungseinheit.

15. Anordnung mit einem System (130) zur Ballbesitzerkennung, das eingerichtet ist zur Durchführung des Verfahrens gemäß einem der Ansprüche 12 bis 14, und mit einem Spielball, der mindestens einen Dauermagneten enthält.

## Claims

1. A device (130) for the detection of a ball possession by means for detecting a magnetic field in a playing device (100) of a ball game, wherein the magnetic field is generated by at least one permanent magnet (110) in the playing device, wherein the device (130) can be associated to a player of the ball game and wherein the means for detecting a magnetic field comprises:
a magnetic field sensor (210); and
a control unit (220) coupled to the magnetic field sensor to receive a sensor signal from the magnetic field sensor, wherein the control unit is adapted to detect whether the sensor signal was caused by the magnetic field of the at least one permanent magnet in the playing device, and to output information about the detection.

2. The device as claimed in claim 1, wherein the magnetic field sensor detects the magnetic field of the at least one permanent magnet and measures the strength of the magnetic field.

3. The device as claimed in claim 2, wherein the magnetic field sensor further detects the terrestrial magnetic field and measures the terrestrial magnetic field strength, and wherein the control unit detects the magnetic field of the at least one permanent magnet due to a change of the terrestrial magnetic field strength by the at least one permanent magnet.

4. The device as claimed in claim 2, wherein the magnetic field sensor is adapted to detect an alternating magnetic field generated by rotation of the at least one permanent magnet in the playing device, and wherein the control unit is adapted to output information about the detection of the alternating magnetic field.

5. The device as claimed in claim 4, wherein the magnetic field sensor comprises at least one measurement output terminal, and wherein the at least one measurement output terminal is decoupled through at least one capacitor.

6. The device as claimed in one of claims 1 to 5, wherein the magnetic field sensor comprises at least one amplifier.

7. The device as claimed in one of claims 1 to 6, wherein the control unit is adapted to output the detection of the magnetic field together with a time stamp that is associated to the time of detection.

8. The device according to one of claims 1 to 7, wherein the means for detecting a magnetic field further comprises:
a memory unit (225);
wherein the control unit is further adapted to store the output information in the memory unit.

9. The device according to claim 8, wherein the device comprises an output unit (230) which enables reading out from the memory unit.

10. The device according to one of claims 1 to 7, wherein the means for detecting a magnetic field further comprises:
a transmission unit;
wherein the control unit is further adapted to transfer the output information by means of the transmission unit to a central evaluation unit.

11. The device according to claim 9, wherein the device is arranged in or on a garment of the player, the garment being preferably located in the proximity of the ball when playing the ball game.

12. A method for ball possession detection by detecting a magnetic field in a playing device (100) of a ball game, wherein the magnetic field is generated by at least one permanent magnet (110) in the playing device, and wherein the method comprises:
detecting (310) a magnetic field;
measuring (320) the magnetic field strength of the detected magnetic field;
detecting (330) whether the magnetic field was caused by the at least one permanent magnet in the playing device; and
outputting (350) information about the detection.

13. The method as claimed in claim 12, wherein detecting and measuring comprises:
detecting the magnetic field of the at least one permanent magnet and measuring (320) the associated magnetic field strength, wherein the detection comprises comparing (410) the measured magnetic field strength with a threshold value:
detecting (430) the terrestrial magnetic field and measuring (430) the terrestrial magnetic field strength, wherein the detection comprises detecting (440) a change of the terrestrial magnetic field strength; or
detecting (450) an alternating magnetic field of the at least one permanent magnet in the playing device and measuring of the strength of the alternating magnetic field, wherein the detection comprises detecting (470) the alternating magnetic field.

14. The method as claimed in one of claims 12 or 13, further comprising:
storing the output information and/or transferring the output information to a central evaluation unit.

15. An arrangement in a system (130) for the detection of a ball possession, arranged for performing the method as claimed in one of claims 12 to 14 and having a ball containing at least one permanent magnet.

## Revendications

1. Dispositif (130) de reconnaissance de détention de balle avec des moyens pour détecter un champ magnétique dans un accessoire de jeu (100) d'un sport de balle, étant précisé que le champ magnétique est produit par au moins un aimant permanent (110) dans l'accessoire de jeu, et que le dispositif (130) peut être associé à un joueur du sport de balle et que les moyens de détection de champ magnétique comprennent :
un capteur de champ magnétique (210) ; et
une unité de commande (220) qui est couplée au capteur de champ magnétique pour recevoir de celui-ci un signal de capteur et qui est conçue pour reconnaître que le signal de capteur a été provoqué ou non par le champ magnétique du ou des aimants permanents dans l'accessoire de jeu, et pour émettre des informations sur cette reconnaissance.

2. Dispositif selon la revendication 1, étant précisé que le capteur de champ magnétique détecte le champ magnétique du ou des aimants permanents et mesure l'intensité dudit champ magnétique.

3. Dispositif selon la revendication 2, étant précisé que le capteur de champ magnétique détecte également le champ magnétique terrestre et mesure l'intensité du champ magnétique terrestre, et que l'unité de commande reconnaît le champ magnétique du ou des aimants permanents à partir d'une variation de l'intensité du champ magnétique terrestre grâce à l'aimant ou aux aimants permanents.

4. Dispositif selon la revendication 2, étant précisé que le capteur de champ magnétique est conçu pour détecter un champ alternatif magnétique qui est produit par la rotation de l'aimant ou des aimants permanents dans l'accessoire de jeu, et que l'unité de commande est conçue pour émettre des informations sur la reconnaissance du champ alternatif magnétique.

5. Dispositif selon la revendication 4, étant précisé que le capteur de champ magnétique comprend au moins une sortie de mesure, et que la ou les sorties de mesure sont découplées par l'intermédiaire d'au moins un condensateur.

6. Dispositif selon l'une des revendications 1 à 5, étant précisé que le capteur de champ magnétique comprend au moins un amplificateur.

7. Dispositif selon l'une des revendications 1 à 6, étant précisé que l'unité de commande est conçue pour émettre la reconnaissance de champ magnétique, avec une estampille qui se rapporte au moment de la reconnaissance.

8. Dispositif selon l'une des revendications 1 à 7, étant précisé que les moyens de reconnaissance de champ magnétique comprennent par ailleurs :
une unité de mémoire (225) ;
étant précisé que l'unité de mémoire est par ailleurs conçue pour stocker dans l'unité de mémoire les informations émises.

9. Dispositif selon la revendication 8, étant précisé qu'il comprend une unité de sortie (230) qui permet une lecture dans l'unité de mémoire.

10. Dispositif selon l'une des revendications 1 à 7, étant précisé que les moyens de reconnaissance de champ magnétique comprennent par ailleurs :
une unité émettrice ;
étant précisé que l'unité de commande est par ailleurs conçue pour transmettre à une unité d'analyse centrale les informations émises, à l'aide de l'unité émettrice.

11. Dispositif selon la revendication 9, étant précisé qu'il est disposé dans ou sur un vêtement qui est porté par le joueur et qui se trouve de préférence près de la balle pendant le déroulement du sport de balle.

12. Procédé de reconnaissance de détention de balle grâce à une détection d'un champ magnétique dans un accessoire de jeu (100) d'un sport de balle, étant précisé que le champ magnétique est produit par au moins un aimant permanent (110) dans l'accessoire de jeu, et que le procédé comprend les étapes qui consistent :
à détecter (310) un champ magnétique ;
à mesurer (320) l'intensité du champ magnétique détecté ;
à reconnaître (330) que le champ magnétique a été provoqué ou non par l'aimant ou les aimants permanents dans l'accessoire de jeu ; et
à émettre (350) des informations sur cette reconnaissance.

13. Procédé selon la revendication 12, étant précisé que les étapes de détection et de mesure comprennent :
la détection du champ magnétique de l'aimant ou des aimants permanents, et la mesure (320) de l'intensité de champ magnétique correspondante, étant précisé que l'étape de reconnaissance comprend la comparaison (410) de l'intensité de champ magnétique avec une valeur seuil ;
la détection (430) du champ magnétique terrestre et la mesure (430) de l'intensité de champ magnétique terrestre, étant précisé que l'étape de reconnaissance comprend la reconnaissance (440) d'une variation de l'intensité de champ magnétique ; ou
la détection (450) d'un champ alternatif magnétique de l'aimant ou des aimants permanents dans l'accessoire de jeu, et la mesure de l'intensité du champ alternatif magnétique, étant précisé que la reconnaissance comprend la reconnaissance (470) du champ alternatif magnétique.

14. Procédé selon l'une des revendications 12 ou 13, comprenant par ailleurs :
la mise en mémoire des informations émises et/ou la transmission à une unité d'analyse centrale des informations émises.

15. Installation avec un système (130) de reconnaissance de détention de balle qui est conçu pour la mise en oeuvre du procédé selon l'une des revendications 12 à 14, et avec une balle qui contient au moins un aimant permanent.
